# EUROPEAN PATENT SPECIFICATION

(11) **EP 1 682 336 B1**
(45) Date of publication and mention of the grant of the patent: **21.05.2008**
(21) Application number: 04791254.8
(22) Date of filing: 19.10.2004
(51) Int. Cl.: B29D 30/08, B29D 30/26

(54) **ASSEMBLY OF DEVICES FOR PRODUCTION OF NON-VULCANIZED RADIAL TIRES AND A METHOD FOR PRODUCTION OF SUCH TIRES**
ANORDNUNG VON VORRICHTUNGEN ZUR HERSTELLUNG VON NICHT VULKANISIERTEN RADIALREIFEN UND VERFAHREN ZUR HERSTELLUNG SOLCHER REIFEN
ENSEMBLE DE DISPOSITIFS POUR LA PRODUCTION DE PNEUMATIQUES RADIAUX NON VULCANISES, ET PROCEDE D'ELABORATION DE CES PNEUMATIQUES

(30) Priority: 22.10.2003 SK 13172003
(43) Date of publication of application: 26.07.2006
(73) Proprietor: CONTINENTAL MATADOR RUBBER, S.R.O., 020 01 Púchov (SK)
(72) Inventor: MIHÁLIK, Peter, 017 01 Povazská Bystrica (SK)
(74) Representative: Majlingova, Marta
(86) International application number: PCT/EP2004/052578
(87) International publication number: WO 2005/039864

(56) References cited:
- EP-A1- 0 351 222
- EP-A1- 0 510 192
- EP-A2- 0 747 207
- PATENT ABSTRACTS OF JAPAN vol. 013, no. 484 (M-886), 2 November 1989 (1989-11-02) & JP 01 190438 A (BRIDGESTONE CORP), 31 July 1989 (1989-07-31)

## Description

### Technical Field

The invention concerns an assembly of devices for production of green radial tires comprising three building drums and a transfer device, disposed on one horizontal axis according to the preamble of claim 1, wherein the device assembly allows continuous linking the manufacture of one component to another and their subsequent completing, resulting in the green radial tire (non-vulcanized tire). The invention concerns also a method for production green radial tires according to the preamble of claim 6.

### Background Art

Recently, there are known several construction assemblies (building lines) for green radial tires production and the corresponding methods for production of such tires. Structural solution of particular devices, their arrangement and mutual interconnection determines the corresponding method for green radial tire production. Each of the assemblies shows some merits or advantages, but also some shortcomings in comparison with the other.

From the point of view of a number of machine units participating on the production of such tires, the methods for green radial tires production known so far may be classified into one-stage and two-stage methods.

The basic principle of a two-stage tire building consists in that the tire production is performed on two completely independent machine devices, usually disposed in different spaces of a shop floor. In the building line No. 1, called the first stage, there is on a carcass building drum prepared the carcass part of the tire, which is then transferred to the second stage. The required components for the carcass assembly are stored in servicers. In the building line No. 2, called the second stage, there is on a belt building drum prepared the belt part of the tire. The required components for the belt assembly are stored in servicers. After the carcass part of the tire prepared in the first stage has been clamped to the shaping drum of the second stage and after the belt assembly has been transferred using a transfer device, shaping of the tire is performed, that means the carcass assembly is expanded and subsequently attached to the belt assembly, and the tire is stitched.

A disadvantage of the two-stage tire building consists in the necessity of manipulation with carcass parts of the tire, their storing, transferring and re-clamping in the second stage, what might adversely affect the tire uniformity.

The basic principle of a one-stage tire building consists in performing the tire production on a single machine device. The one-stage tire building lines differ considerably in the number of building drums and transfer devices, and in their mutual arrangement.

The basic principle of a one-stage one-drum tire building is that the carcass and belt part of the tire are prepared on one building drum. A great disadvantage of the one-stage one-drum tire building consists in low productivity, winding up the belt assembly on a shaped carcass assembly and, therefore, in great problems with the tire uniformity.

The basic principle of a one-stage two-drum tire building is utilization of advantages of the two-stage tire building, thus expanding the carcass assembly into the belt assembly clamped in the transfer device. The tire building line usually consists of a belt building drum, a carcass building drum and a transfer device for transferring the belt assembly. The belt building drum is used for preparation of the belt assembly. The carcass building drum is used for preparation of the carcass assembly, shaping and stitching the tire. A disadvantage consists in a long time period for the building cycle, as well as a relatively long time interval when changing dimensions of the produced tires.

A further possibility of one-stage tire building is a multi-drum building, namely production of green radial tires on an assembly of devices comprising three or four drums. Unlike with the production of green radial tires on a two-drum assembly of devices, the carcass assembly for the next tire is prepared on a further drum during the cycle of shaping and stitching the tire being produced. Shaping and stitching may be performed on a further building drum. The resulting effect is a further shortening of the production cycle period for one tire. The operating cycle takes place in parallel on several drums which cooperate by means of several transfer devices.

Depending on mutual position and number of building drums and transfer devices several variants are possible.

A concept of a 3-drum building line is known which consists of a carcass building drum, a belt building drum and a completing drum, wherein all above machines are positioned on one axis. The operating cycle takes place in parallel at three places (drums) which cooperate by means of a pair of transfer devices. A disadvantage is a pair of transfer devices and, therefore, more complicated structure of the tire building line...

Also known is a concept of a one-stage, one-axis, 4-drum tire building line consisting of a carcass building drum, a belt building drum and a pair of completing drums, a carcass transferring device and belt transferring device, wherein all above machines are disposed on one axis. Moreover, a double completing drum may also be rotated around a vertical axis. The operating cycle takes place in parallel on four drums, which cooperate through the transfer devices and by mutual rotating the completing drums around a vertical axis by 180°.

A disadvantage of this concept is the pair of the completing drums which is not fixedly positioned and may be rotated, together with a driving box, around the vertical axis by 180°, which fact considerably complicates construction of the driving unit and also may act adversely on mechanical allowances of the building line. A further disadvantage is presented by the time necessary for rearrangement of the building line, because in case of change of the tire bead diameter it is necessary to replace two shaping drums. A disadvantage consists also in a large build-up area of such building line.

A further known concept of a one-stage, 4-drum tire building line consists of a pair of completing drums, a belt and tread building drum, a belt and tread transferring device and a wire bead feeder. The above machines are disposed in two parallel lines, wherein there is a possibility for the completing drums to exchange mutually their positions by 180°.

A disadvantage is that the completing drums are not fixedly positioned, they may exchange mutually their positions by 180° around a fictitious parallel axis, thus considerably complicating construction of the driving unit. A further disadvantage is that in case of the bead width change it is necessary to replace the central segments on both completing drums, and in case of the bead diameter change it is necessary to replace two completing drums.

One of known one-stage devices for production of green radial tires, the individual stations of which are arranged on several axes, is mentioned also in the US patent No. 5 853 525, which describes a device for production of green radial tires by a method, in which the tire carcass is shaped in advance to a cylinder shape and expanded on the building drum so that it is wraps the wire beads and inserts of the tire. The device consists of a first band drum movably arranged on a first axis for carcass production. Subsequently, on the first transfer ring, an inner liner having a smaller diameter than that of the carcass cylinder is introduced into the carcass, pressed against its inner surface, and so the first assembly is created. During the same time period, on a second bending drum, sidewalls and reinforcing bands for wrapping the wire beads are shaped to form a second assembly of sidewalls having smaller diameter than that of the first assembly. After the second assembly has been arranged in a predetermined position within the first assembly, the second assembly is expanded and pressed against the first assembly, so that a third assembly is formed. The first transfer ring and the shaping drum are moved to a certain position and the third assembly, disposed in the first transfer ring, is transferred to the shaping drum. Then the shaping drum is expanded and the wire bead holders are moved against each other to form a round shape of the shaped green radial tire. The tread and belt assembly, shaped in advance into a cylinder shape on a further band drum, is brought by the second transfer ring and attached to the third assembly during shaping. This ends the production of a green radial tire. To all of the above drums servicers with the respective materials are associated. This method can be realized using a device arranged on two parallel axes, wherein on one axis the first and the second band drum, as well as the device for bringing the wire beads and liners, are arranged, and on the second axis the shaping drum and the drum for preparation of the belt and tread assembly in advance are arranged.

The described method of green radial tires production can also be realized on a device arranged on three parallel axes, wherein on the middle axis the second band drum is arranged.

In EP 597125 B1, there is described a device for tire production, comprising a band drum, a shaping (tire building) drum and a device comprising two belt building drums, which may oscillate or move in a cyclic manner, wherein the band drum and the device which comprises two belt building drums, are arranged on one axis and oriented opposite each other. The shaping drum is positioned so that it can alternate between a position on the above axis and a standby position, preserving parallel orientation to the said axis. The carcass and belt transfer units are disposed so that they can reciprocate along the said axis between the band drum and the device for belt production.

In EP 880436 B1, there is described a device for radial tires production for vehicles, consisting of a first machine house with two co-axially disposed shafts extending in a first horizontal main direction, wherein the first shaft is carrying a belt building drum and the second shaft is carrying a tread building drum, the latter drum being disposed at a greater distance from the first machine house along the first horizontal main direction. Drives for these shafts are independent. The device further comprises a second machine house with a shaft rotating around a second horizontal main direction, which is parallel to the first horizontal main direction. The shaft of the second machine house is carrying two carcass shafts, which are arranged parallel to each other at a certain distance, wherein the first shaft is carrying a first carcass building drum and the second shaft is carrying a second carcass building drum. The shafts are driven independently and they are rotationally arranged in such a way that each of them can be brought onto the axis of the first horizontal main direction. The device comprises a gu iding track with displacement direction parallel to the first horizontal main direction, on which there are disposed a first transfer ring movable between the belt building drum and the tread building drum, and a second transfer ring movable between the tread building drum and the carcass building drum, turned in line with the axis of the first main direction. On the guiding track there is disposed a unit for holding and setting the bead wires on the carcass building drum, which is rotated in line with the axis of the first main direction. The device further comprises servicers for particular components, a stitching device, disposed below the shaping drum, and a unit for removing the completed tires.

SK 278322, which represents the closest state of the art, describes a method of tire production using multi-stage technology and a device for performing the method. The device consists of two machine houses, which are carrying three drums arranged on one axis. The first machine house, carrying a carcass building drum, is equipped with two carcass components servicers and an integrated transfer ring. The second machine house, carrying a belt building drum and a completing drum, is equipped with a transfer ring for the belt rings and with a belt and tread servicer. A disadvantage of the said device consists in that it is necessary to control positions of two transfer rings for transferring components of the tire being produced.

EP 0 510 192 describes a green tire building apparatus which comprising a belt-making mechanism (1), a transfer mechanism (2), a green tire building mechanism (3) and bead-setting mechanisms (4 and 5), wherein the mechanisms (4 and 5) have functions of pressing a ply-tumup bladder, segments (24a) holding a belt-tread assembly (8) are driven by a hydraulic cylinder (24b) and a green-tire takeout mechanism (9) is attached to the transfer mechanism (2).

EP 0351222 describes an apparatus for building green tires which includes a carcass band forming drum (5) for forming a carcass band (K), a first forming drum (19) arranged rearward of and coaxially to the carcass band forming drum for forming green cases (G), first transfer means (32) movable between the carcass band and first forming drum for transferring and pressing beads (B) to the carcass band and for transferring the united beads and the carcass band to the first forming drum and folding axial edges of the carcass band about the beads upon itself in cooperation with the first forming drum, a second forming drum (62) arranged rearward of the first forming drum for toroidally deforming the green case, second transfer means (66) movable between the first and second forming drums for transferring and delivering the green ease from the first forming drum and second forming drum, a band forming drum (55) arranged rearward of the first forming drum for forming a band (D), and third transfer means (96) movable between the band forming drum and the second forming drum for transferring the band to an outer side of the green case to form a green tire; and a method of building green tires using such apparatus.

EP 0 747 207 describes a tire building machine which includes a single-stage type forming drum (13) for initially forming a carcass band (29) and subsequently forming a green tire (34), and a belt-tread drum (14) for forming a belt-tread band (31). These drums (13, 14) are carried by a horizontal coaxial shaft (12) on a base member (10) of the machine. An integrated transfer unit (16) is movable in a predetermined transfer direction on the base member (10). The transfer unit (16) includes a bead setter (17) for setting beads (23) onto an outer circumference of a carcass band (29) formed on the forming drum (13), and a transfer ring (18) for transferring a belt-tread band (31) formed oh the belt-tread drum (14) and a green tire (34) formed on the forming drum (13). The bead setter (17) and the transfer ring (18) are connected to each other as an integrated unit, and driven by a single drive means in the transfer direction.

JP 01190438 describes a transfer device for cylindrical member to change the bead setting position and the wrapping position of a cylindrical component by moving a truck dose to or away form a molding drum in the state of wrapping a component with a couple of wrapping means and transferring beads form a beads retaining means to the cylindrical component.

### Disclosure of Invention

The above given disadvantages are substantially eliminated according to the invention by an assembly of devices for production of green radial tires, which comprises a carcass building drum, a belt building drum and a completing drum, which are arranged on one horizontal axis, wherein the carcass building drum and the belt building drum are equipped with the respective supply systems as defined in claim 1. Particular embodiments of the invention are the subject of the dependent claims. The subject-matter of said assembly of devices for Production of green radial tires consists in that the carcass building drum is carried by a first driving unit, and the belt building drum and the completing drum are carried by co-axially arranged shafts of a second driving unit, which is arranged opposite the first driving unit carrying the carcass building drum, and between the belt building drum and the carcass building drum there is movably arranged only one transfer device, which consists of a transfer ring for transferring the belt-tread assembly and two carcass assembly, wherein the axial distance between the center of the ring holders for wire beads and the center of the ring for transferring the belt-tread assembly equals to the axial distance of vertical planes passing through the (symmetry) centers of the drums, arranged on coaxial shafts of the second driving unit.

Any known kind of transfer ring for transferring the belt-tread assembly may be used as the transfer ring for transferring the belt-tread assembly, but it must be integrated with the transfer ring of the carcass assembly formed by two holders of wire beads, and it may possibly further comprise a ring for vacuum attaching the carcass assembly, disposed in the middle between the wire bead holders. Any known kinds of wire bead holders may be used as the wire bead holders, but magnetic wire bead holders appear to be preferred.

A transfer device according to the present invention may be axially movably suspended on a guiding track arranged over the horizontal axis of the drums, or the transfer device may be axially movably arranged on a guiding track arranged under the horizontal axis of the drums. In any case, the transfer device and the drums are disposed on the same horizontal axis. (In any case, the horizontal axes of the transfer device and of all three drums are identical.)

The drums of the assembly for production of green radial tires are disposed on one axis in such a way that the belt building drum is co-axially coupled with the completing drum, wherein the completing drum is disposed between the carcass building drum and the belt building drum and, therefore, at a greater distance from the second driving unit than the belt building drum.

The assembly of devices for production of green radial tires may preferably comprise a unit for bringing and setting the wire beads on the wire bead holders which are disposed on the transfer device. The unit for supplying and mounting of the wire beads may be arranged so that it is moved together with the transfer device on a guiding track, or it may be static and positioned non-movably near the guiding track.

An assembly of devices according to the invention may preferably comprise also a stitching device for complete attaching the belt-tread assembly to the expanded carcass assembly which is disposed near the completing drum.

In some cases, it is preferable if the assembly of devices according to the invention comprises a winding device, located near the belt building drum, for winding up a spiral belt. The spiral belt may be supplied from a supply system, associated with the belt building drum.

According to a preferred embodiment the assembly of devices for production of green radial tires according to the invention includes also a device for removing the finished radial tires from the production space.

An assembly of devices for production of green radial tires according to the invention is suitable for radial tire production. Such tires usually consist of a carcass assembly, comprising side walls, inner liner, on which one or two carcass inserts and possibly also further carcass materials are arranged, the tires further comprising wire beads with cores and a belt-tread assembly, formed by at least two belts and possibly a spiral belt and a tread, wherein the tread edge may overlap the tire side walls or vice versa.

The task for the transfer device, which is movable in both directions on the axis of drums, is to take over the individual components of the tire from one drum, and transfer them to the correct place and deliver them at the correct time, as well as to remove the finished radial tire from the production space.

The subject-matter of the method for production of green radial tires according to a second aspect of the invention as defined in claim 6 consists in that the carcass assembly in the form of a cylinder jacket is prepared on the carcass building drum. After the carcass assembly has been prepared in the form of a cylinder jacket, a transfer device with wire beads prepared in advance in wire bead holders is brought over the carcass bu ilding drum. In this position of the transfer device, the diameter of the carcass building drum, on which the carcass assembly has been prepared, is expanded into the wire beads, thus clamping the carcass assembly by the transfer device. Subsequently, the carcass building drum diameter is decreased to the original dimension. After the transfer device has been removed from the carcass bu ilding drum space, winding up the carcass assembly of the next tire may be started.

The belt-tread assembly, consisting of belts, possibly a spiral belt and a tread, is prepared on the belt building drum in the time, during which the transfer device is situated over the carcass building drum and takes over the carcass assembly from it. Tire shaping, joining its individual components and stitching, thus the tire completion, is performed on the completing drum.

The transfer device transfers the carcass assembly on the completing drum and during delivering the carcass assembly to the completing drum, the transfer ring for transferring the belt-tread assembly which is in this phase situated just over the belt building drum, takes over the belt-tread assembly from the belt building drum. After the carcass assembly has been released together with the wire beads from the transfer device and after putting it on the completing drum, clamping of the carcass assembly on the completing drum is performed and, simultaneously, the belt-tread assembly is clamped in the ring of the transfer device for transferring the belt-tread assembly. The transfer device is displaced so that the center of the belt-tread assembly occurs over the center of the carcass assembly, which is disposed symmetrically with respect to the symmetry plane of the completing drum and, subsequently, the carcass shaping into the belt-tread assembly and then stitching are performed. Simultaneously, taking over the wire beads from the wire loader into the wire bead holders is performed for the next tire. It is also possible to load the wire beads on the wire bead holders manually. After shaping, stitching the tire and taking over the wire beads for the next tire by the transfer device and clamping the just produced tire, the transfer device is moved over the carcass building drum again and the just produced tire is released. The whole cycle is then repeated.

A more detailed explanation of the method of green radial tires production and the device utilizing the method is given below by means of attached drawings and examples of embodiments of the invention.

### An overview of figures on the drawings

The enclosed Figures 1 to 3 show schematically an assembly of devices according to the invention in various stages of the tire production, wherein in Figure 1 there is shown the transfer device over the carcass building drum, in Figure 2 over the completing and the belt building drum, in Figure 3 over the completing drum, and Figure 4 shows schematically an independent transfer device.

### Example of the invention embodiment

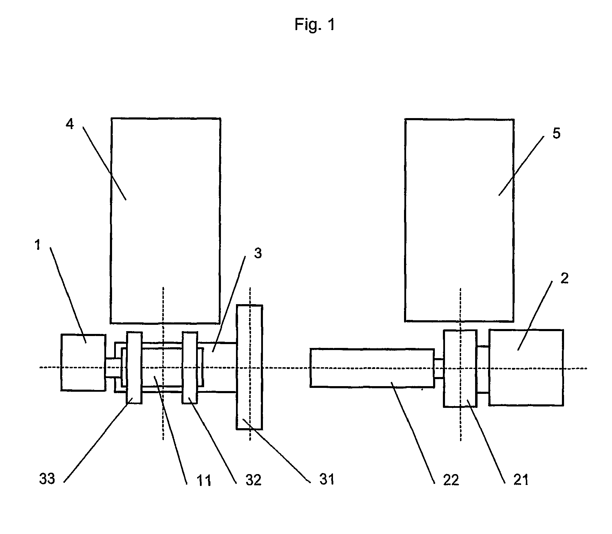

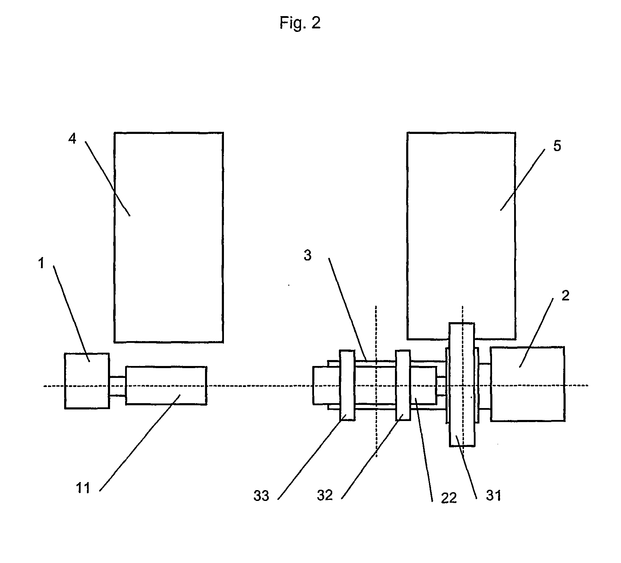

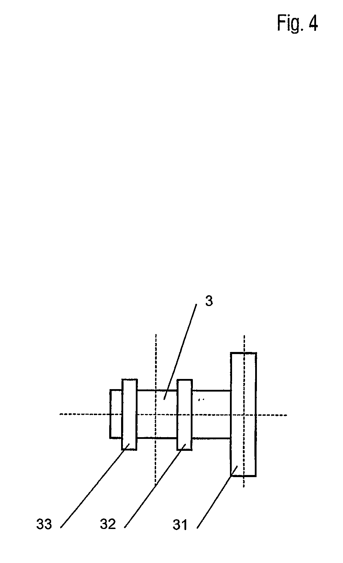

The device schematically shown in Fig. 1 consists of a driving unit 1 of the carcass building drum, to which is attached the carcass building drum 11. With the carcass drum 11 is associated a supply system 4 for supplying side walls, inner liner and carcass inserts in the form of bands. Opposite the first driving unit 1 there.is arranged a second driving unit 2, which bears the belt building drum 21 and the completing drum 22. The belt building drum 21 and the completing drum 22 are carried by co-axially arranged shafts and are operated independently. The drums are arranged so that the belt building drum 21 is disposed at a smaller distance from the second driving unit 2 than the completing drum 22. A stitching device, not shown in the drawings, is associated with the completing drum 22. The belt building drum has associated a supply system 5 for supplying belts and tread. On the same axis as all three drums, there is movably arranged the transfer device, schematically shown separately in Fig. 4. The transfer device 3 consists of a carcass assembly carrier on which there are arranged two ring holders 32, 33 of wire beads and which is, at the side turned to the belt building drum 21, equipped with a ring 31 for transferring the belt-tread assembly. The transfer device 3 is designed so that the axial distance of the center of the ring holders 32, 33 of the wire beads from the center of the ring 31 for transferring the belt-tread assembly equals to the axial distance between vertical planes, passing through the centers of drums arranged on coaxial shafts of the second driving unit 2, as shown in Fig. 2.

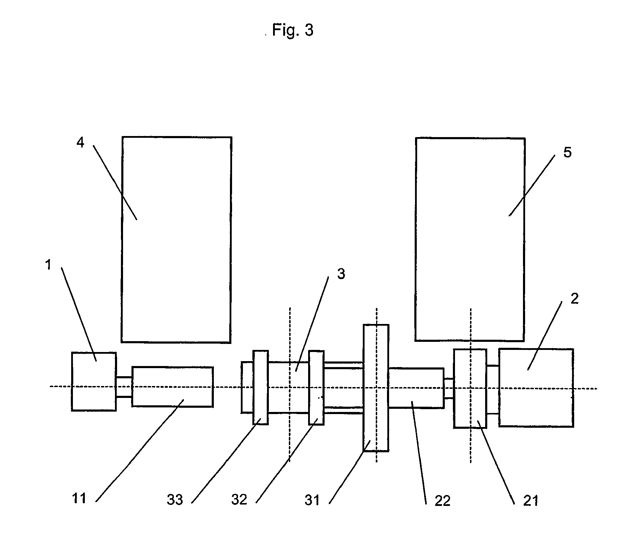

Near the place, where the carcass assembly carrier with the wire bead holders is located, as shown in Fig. 3, that means between the completing drum 22 and the carcass building drum 11, a unit (not shown) for bringing and anchoring the wire beads on the holders 32, 33 of wire beads may be disposed. This unit may be disposed also directly on the transfer device 3 and it is moving together with the transfer device on a guiding track.

The cycle of green radial tire production according to the invention starts with the carcass assembly production by winding up the side walls, inner rubber, carcass inserts and further materials constituting a part of the carcass assembly, which are prepared and supplied to the carcass building drum 11 by the carcass supply system 4. On the belt building drum 21 there are wound up belt materials, possibly also a spiralled belt and tread, which are prepared by the belt supply system 5. After the carcass assembly has been wound up, this is in the form of a cylinder jacket prepared for transfer to the completing drum. The transfer device 3 is pushed in place over the carcass building drum, as shown in Fig. 1, so that the carcass building drum is located in a cavity of the transfer device 3, wherein the vertical plane passing through the center of the axial distance between the holders 32, 33 of the wire beads of the transfer device 3 is identical with vertical plane passing through the axial center of the carcass building drum 11. The carcass building drum 11 increases its diameter until the carcass assembly touches the wire beads which have been prepared in the holders 32, 33 in advance and it is attached to them. Subsequently, the carcass building drum diameter decreases to its original dimension. The transfer device 3 with the carcass assembly of the tire to which the wire beads are attached is pushed in place over the completing drum so that the said vertical plane which forms a symmetry plane of the produced tire, will be identical with the vertical symmetry plane of the completing drum 22. The completing drum increases its diameter in the area of wire beads attachment, thus fixing the wire beads. Subsequently, wire beads holders 32, 33 release the wire beads and the transfer device 3 delivers the carcass assembly with clamped wire beads to the completing drum 22 (Fig. 2). At the same time, when delivering the carcass assembly to the completing drum 22 is performed, the transfer device is taking over the belt-tread assembly from the belt building drum 21 to the ring 31 for transferring the belt-tread assembly. After the transfer device 3 has delivered the carcass assembly and taken over the belt-tread assembly, it moves along the axis of the drums to a position, shown in Fig. 3, in which the vertical plane passing the center of the belt-tread assembly, clamped in the ring 31, is identical with the vertical plane passing the center of the completing drum. Then on the completing drum 22, completion of the radial tire is performed, in the course of which the carcass assembly is expanded into the prepared belt-tread assembly and side walls of the tire are formed by turning up and pressing material of the side walls around the wire beads and against the expanded carcass inserts, respectively. Also the stitching operation is a part of the completion. During completion there is enough time to load the wire beads into the wire bead holders 32, 33 of the transfer device 3. After the cycle is finished, the finished green radial tire is clamped in the ring 31, and the transfer device 3 with the clamped tire is moved, again along the axis of the drums, to a position, shown in Fig. 1, to take over a carcass assembly from the carcass building drum 11, wherein the ring 31 is disposed between the carcass building drum 11 and the completing drum 22, thus allowing the manipulator or operating personnel to remove the finished green radial tire from the ring 31 to a space outside the device.

## Claims

1. An assembly of devices for production of green radial tires, consisting of a carcass building drum (11), a belt building drum (21), and a completing drum (22), which are arranged on one horizontal axis, wherein the carcass building drum (11) and the belt building drum (12) are equipped with the respective supply systems (4, 5), **characterized in that**
the carcass building drum (11) is carried by a first driving unit (1) and the belt building drum (21) and the completing drum (22) are carried by co-axially arranged shafts of a driving unit (2), which is arranged opposite the driving unit (1) carrying the carcass building drum (11), and between the belt building drum (21) and the carcass building drum (11) there is movably arranged only one transfer device (3).

2. An assembly of devices for production of green radial tires according to claim 1, **characterized in that**
the transfer device (3) consists of a transfer ring (31) for transferring the belt-tread assembly, on which there is attached a carrier for transferring the carcass assembly and two ring holders (32, 33) of wire beads, arranged on the carrier for transferring the carcass assembly, wherein the axial distance between the center of the ring holders (32, 33) of wire beads and the center of the ring (31) for transferring the belt-tread assembly equals to the axial distance of vertical planes passing through the (symmetry) center of the drums, arranged on coaxial shafts of driving unit (2).

3. An assembly of devices for production of green radial tires according to claim 1 or 2, **characterized in that**
it comprises a unit for supplying and mounting the wire beads on the wire bead holders (32, 33).

4. An assembly of devices for production of green radial tires according to any of the claims 1, 2 or 3, **characterized in that**
near the completing drum (22) there is disposed a stitching device for complete attaching the belt-tread assembly to the expanded carcass assembly.

5. An assembly of devices for production of green radial tires according to any of the claims 1, 2, 3 or 4, **characterized in that**
it comprises a device for removing the finished green radial tires.

6. A method for production of green radial tires, formed by side walls, inner rubber, carcass inserts, belts and tread and possibly further materials,
**characterized in that**
it includes the following steps:
- preparation of a carcass assembly in the shape of a cylinder jacket, consisting of side walls, inner rubber and carcass inserts, on the carcass building drum (11), arranged on a first driving unit (1), from materials supplied in the form of bands by the supply system (4);
- preparation of the belt-tread assembly, consisting of belts, possibly a spiralled belt and tread, on the belt building drum (21), arranged on a second driving unit (2), from the respective materials, supplied in the form of bands by the supply system (5);
- pushing the transfer device (3) with wire beads loaded in the wire bead holders (32, 33) over the carcass building drum (11) so that the vertical plane passing through the center between the wire bead holders becomes identical with the vertical symmetry plane of the carcass building drum (11) and the carcass assembly, which is disposed on it;
- clamping the carcass assembly on the wire beads placed in the wire bead holders (32, 33) of the transfer device (3) by increasing the diameter of the carcass building drum (11) with subsequent decreasing the diameter of the carcass building drum to its original dimension;
- transferring the carcass assembly from the carcass building drum (11) to the completing drum (22) by translating the transfer device (3) with the clamped carcass assembly along the axis of the drums over the completing drum (22) to a position in which the vertical plane passing the center between the wire bead holders (32, 33) is identical with the vertical symmetry plane of the completing drum (22) and, simultaneously, vertical planes passing the center of the ring (31) for transferring the belt-tread assembly and the belt building drum, are identical;
- taking over the carcass assembly from the wire bead holders (32, 33) by the completing drum (22) and, simultaneously, taking over the belt-tread assembly by the ring (31) from the belt building drum (21);
- transfer of the belt-tread assembly from the belt building drum (21) over the completing drum (22) by the ring (31) for transferring the belt-tread assembly by moving the transfer device (3) to a position, where the transfer device is disposed over the completing drum (22);
- completion of the green radial tire on the completing drum (21), comprising expanding the carcass assembly into the belt-tread assembly and winding up materials around the wire beads, leading to formation of side walls of the tire, and stitching by the stitching device for complete attaching the belt-tread assembly to the carcass assembly;
- clamping and transfer of the ready green radial tire by the ring (31) of the transfer device (3) to a place, where it can be removed by translating the transfer device (3) with loaded wire beads over the carcass building drum (11).

## Patentansprüche

1. Reifenkonfektioniermaschine bestehend aus Karkassentrommel (11), Puffertrommel (21) und Komplettierungstrommel (22), die auf einer horizontalen Achse angeordnet sind, wobei die Karkassentrommel (11) und die Puffertrommel (12) mit entsprechenden Versorgungssystemen (4, 5) versehen sind, **dadurch gekennzeichnet, dass** die Karkassentrommel (11) von der ersten Antriebseinheit getragen wird und die Puffertrommel (21) und die Komplettierungstrommel (22) von den koaxial angeordneten Wellen der Antriebseinheit (2) getragen werden, die gegenüber der Antriebseinheit (1) positioniert ist, die die Karkassentrommel (11) trägt und zwischen der Puffertrommel (21) und der Karkassentrommel (11) ist beweglich die einzige Transfervorrichtung (3) angeordnet.

2. Reifenkonfektioniermaschine wie in Anspruch 1 beansprucht, **dadurch gekennzeichnet, dass** die Transfervorrichtung (3), die aus dem Transferring (31) für den Transfer des Gürtel-Laufflächen-Bandes, auf dem der Überträger für den Transfer des Karkassenbandes angeordnet ist und aus zwei Ringhaltern (32), (33) von Reifenwülsten besteht, die auf dem Überträger für den Transfer des Karkassenbandes angeordnet sind, wobei der Axialabstand von der Mitte der Ringhalter (32), (33) der Reifenwülste und der Ringmitte (31) für den Transfer des Gürtel-Laufflächen-Belags gleich der axialen Entfernung der vertikalen Ebenen ist, die durch die Mitte (Symmetrie) der auf den koaxialen Wellen der Antriebseinheit (2) angeordneten Trommeln verlaufen.

3. Reifenkonfektioniermaschine wie in Anspruch 1 oder 2 beansprucht, **dadurch gekennzeichnet, dass** sie eine Einheit zum Zuführen und Einsetzen der Reifenwülste auf die Halter (32), (33) der Reifenwülste aufweist.

4. Reifenkonfektioniermaschine wie in irgendeinem der Ansprüche 1, 2 oder 3 beansprucht, **dadurch gekennzeichnet, dass** in der Nähe der Komplettierungstrommel (22) die Einrollvorrichtung für die vollständige Verbindung des Gürtel-Laufflächen-Bandes und des aufgepumpten Karkassenbandes positioniert ist.

5. Reifenkonfektioniermaschine wie in Anspruch 1, 2, 3 oder 4 beansprucht, **dadurch gekennzeichnet, dass** sie die Vorrichtung zum Abheben der fertigen Radialreifen integriert ist.

6. Reifenkonfektionierungsverfahren, gebildet mit Seitenwänden, Innengummi, Karkassenlagen, Puffern und Laufflächen und eventuell weiteren Materialien, **dadurch gekennzeichnet, dass** folgende Schritte integriert sind:
- Vorbereitung des Karkassenbandes in der Form einer Reifenwalze, bestehend aus Seitenwand, Innengummi und Karkassenlagen, die an der Karkassentrommel (11) an der ersten Antriebseinheit (1) angeordnet ist, aus Materialien, die in der Form von Bändern aus dem Versorgungssystem (4) zugeführt werden;
- Vorbereitung des Gürtel-Laufflächen-Bandes bestehend aus Puffern, eventuell aus Spiralpuffer und Lauffläche auf der Puffertrommel (21), die auf der zweiten Antriebseinheit (2) angeordnet ist, aus den entsprechenden Materialien, die in der Form von Bändern aus dem Versorgungssystem (5) zugeführt werden;
- Verschiebung der Transfervorrichtung (3) mit eingesetzten Reifenwülsten in den Haltern (32, 33) in den Reifenwulsthaltern über die Karkassentrommel (11) so, dass die vertikale Ebene, die durch die Mitte zwischen den Reifenwulsthaltern verläuft, mit der vertikalen Ebene der Symmetrie der Karkassentrommel (11) und dem auf ihr positionierten Karkassenband zusammenfällt;
- Befestigung des Karkassenbandes in die Reifenwülste, die in den Haltern (32, 33) der Reifenwülste der Transfervorrichtung (3) positioniert sind, mit Vergrößerung des Durchmessers der Karkassentrommel (11) mit folgender Verkleinerung des Durchmessers der Karkassentrommel auf das ursprüngliche Maß.
- Transfer des Karkassenbandes aus der Karkassentrommel (11) auf die Komplettierungstrommel (22) durch Transfer der Transfervorrichtung (3) in Trommelachse mit befestigtem Karkassenband über Komplettierungstrommel (22) in die Position, in der die vertikale Ebene durch die Mitte zwischen den Haltern (32, 33) der Reifenwülste verläuft, die mit der vertikalen Ebene der Symmetrie der Komplettierungstrommel (22) identisch ist und gleichzeitig auch mit der vertikalen Ebene zusammenfällt, die durch die Mitte des Rings (31) für den Transfer des Gürtel-Laufflächen-Bandes und der Puffertrommel (21) verläuft;
- Übernahme des Karkassenbandes von den Reifenwulsthaltern (32, 33) von der Komplettierungstrommel (22) und gleichzeitig Übernahme des Gürtel-Laufflächen-Bandes durch den Transferring (31) aus der Puffertrommel (21);
- Transfer des Gürtel-Laufflächen-Bandes aus der Puffertrommel (21) über Komplettierungstrommel (22) durch Transferring (31) für Transfer des Gürtel-Laufflächen-Bandes durch Verschiebung der Transfervorrichtung (3) in die Position, wenn die Transfervorrichtung über der Komplettierungstrommel (22) ist;
- Komplettierung des Radialreifens auf der Komplettierungstrommel (21) umfasst Aufpumpen des Karkassenbandes in das Gürtel-Laufflächen-Band und die Umwicklung der Materialien um die Reifenwülste für die Bildung der Seitenwände des Autoreifens und Einrollen mit der Einrollvorrichtung für die vollständige Verbindung des Gürtel-Laufflächen-Bandes mit dem Karkassenband;
- Greifen und Transfer des fertigen Radialreifens mit dem Transferring (31) der Transfervorrichtung (3) an die Stelle, wo er durch Verschiebung der Transfervorrichtung (3) mit eingesetzten Reifenwülsten über der Karkassentrommel (11) abgenommen werden kann.

## Revendications

1. Groupe de dispositifs de confection de bandages pneumatiques non vulcanisés radiaux est composé d'un tambour de formage (11), d'un tambour de la ceinture (21) et d'un tambour de la bande de roulement (22). Lesdits tambours sont disposés dans un seul axe horizontal et en même temps les tambours de formage (11) et de ceinture (21) sont équipés par les systèmes de ravitaillement correspondants. Le groupe se distingue par le fait, que le tambour de formage (11) est supporté par le premier moyen d'entraînement (1) tandis que les tambours de la ceinture (21) et de la bande de roulement (22) sont supportés par les arbres disposés de manière coaxiale du moyen d'entraînement (2), qui se trouve en face du moyen d'entraînement (1) supportant le tambour de formage (11). En plus, une unité de transfert d'une seule pièce (3) est disposée de manière flexible entre le tambour de la ceinture ( 21) et celui de formage (11).

2. Groupe de dispositifs de confection de bandages pneumatiques non vulcanisés radiaux selon la revendication 1 est **caractérisé par le fait, que** l'unité de transfert (3) consiste d'une bague de transfert (31) destinée à transférer une bande de ceinture et de roulement. La bague de transfert est connectée à un transmetteur destiné au transfert de la bande de carcasse et des deux supports de bague (32), (33) des câbles de talon disposés sur le transmetteur afin de transférer la bande de carcasse. En même temps, la distance axiale du centre des supports de bague (32), (33) des câbles de levier (de talon ?) et du centre de la bague destinée au transfert de la bande de ceinture et de roulement est égale à la distance axiale des plans verticaux passant par le centre de symétrie des tambours disposés sur les axes coaxiaux du moyen d'entraînement (2).

3. Groupe de dispositifs de confection de bandages pneumatiques non vulcanisés radiaux selon les revendications 1 ou 2, **caractérisé en ce qu'**il comprend une unité destinée à amener des câbles de talon et à les fixer sur les supports (32), (33) des câbles de talon.

4. Groupe de dispositifs de confection de bandages pneumatiques non vulcanisés radiaux selon les revendications 1, 2 ou 3, **caractérisé par le fait, qu'**un dispositif de roulement, destiné à assurer une connexion complète de la bande de ceinture et de roulement et de la bande de carcasse gonflée, est situé à proximité du tambour de la bande de roulement.

5. Groupe de dispositifs de confection de bandages pneumatiques non vulcanisés radiaux selon les revendications 1, 2, 3 ou 4, **caractérisé en ce qu'**il comprend un dispositif de prélèvement des bandages pneumatiques non vulcanisés radiaux finis.

6. Le procédé de confection de bandages pneumatiques non vulcanisés radiaux, qui sont constitués par les flancs de l'enveloppe, le caoutchouc intérieur, les pièces d'insertion de carcasse et de ceinture ainsi que de la bande de roulement et éventuellement par d'autres matériaux, est **caractérisé par le fait, qu'**il inclue des pas suivants.
- préparation de l'enveloppe de carcasse de sorte qu'elle acquière la forme de cylindre. L'enveloppe de carcasse comprend les flancs de l'enveloppe, le caoutchouc intérieur et les pièces d'insertion de carcasse. Cette partie de la confection est faite sur le tambour de formage (11) disposé sur le premier moyen d'entraînement (1) à partir des matériaux livrés sous forme des bandes par le système de ravitaillement (4) ;
- préparation de la bande de ceinture et de roulement comprenant les amortisseurs, ou de la ceinture de spiral et de la bande de roulement sur le tambour de la ceinture (21) disposé sur le second moyen d'entraînement (2) à partir des matériaux correspondants livrés sous forme des bandes par le système de ravitaillement (5) ;
- déplacement de l'unité de transfert (3), avec les câbles de talon fixés dans les supports (32, 33) de ces câbles, au-dessus du tambour de formage (11) de sorte que le plan vertical passant par le centre entre les supports des câbles de talon se confonde avec le plan vertical de symétrie du tambour de formage (11) et de la bande de carcasse située sur ce dernier ;
- fixation de la bande de carcasse dans les câbles de talon situés dans les supports (32, 33) des câbles de talon de l'unité de transfert (3) par l'intermédiaire de l'augmentation du diamètre du tambour de formage (11) et de la conséquente diminution du diamètre du tambour de formage vers la dimension originale ;
- transfert de la bande de carcasse depuis le tambour de formage (11) vers le tambour de la bande de roulement (22) par l'intermédiaire du déplacement de l'unité de transfert (3) dans l'axe des tambours, avec la bande de carcasse fixée, au dessus du tambour de la bande de roulement (22). La position finale du transfert est celle où le plan vertical passant par le centre entre les supports (32, 33) des câbles de talon est identique au plan vertical de symétrie du tambour de la bande de roulement (22) et en même temps les plans verticaux passant par le centre de la bague (31) de transfert de la bande de ceinture et de roulement et du tambour de la ceinture se confondent ;
- reprise de la bande de carcasse depuis les supports des câbles de talon (32, 33) par le tambour de la bande de roulement (22) et reprise simultanée de la bande de ceinture et de roulement par la bague (31) du tambour de la ceinture (21) ;
- transfert de la bande de ceinture et de roulement depuis le tambour de la ceinture (21) au-dessus du tambour de la bande de roulement (22) par la bague (31) destinée au transfert de la bande de ceinture et de roulement. Le transfert est effectué par l'intermédiaire du déplacement de l'unité de transfert (3) vers la position où l'unité de transfert se trouve au-dessus du tambour de la bande de roulement (22) ;
- complètement des bandages pneumatiques non vulcanisés radiaux sur le tambour de la bande de roulement (22). Cette opération comprend le gonflement de la bande de carcasse vers l'intérieur de la bande de ceinture et de roulement et enroulement des matériaux autour des câbles de talon lors de la constitution des flancs du bandage pneumatique et roulement par le dispositif de roulement afin d'assurer la connexion parfaite de la bande de ceinture et de roulement et de la bande de carcasse ;
- fixation et transfert du bandage pneumatique non vulcanisé radial par la bague (31) de l'unité de transfert (3) à l'endroit, où il peut être repris par l'intermédiaire du déplacement de l'unité (3) de transfert avec les câbles de talons montés au-dessus du tambour de formage.
